# EUROPEAN PATENT SPECIFICATION

(11) **EP 3 322 617 B1**
(45) Date of publication and mention of the grant of the patent: **13.11.2019**
(21) Application number: 15817606.5
(22) Date of filing: 15.10.2015
(51) Int. Cl.: B60R 19/34

(54) **BUMPER ASSEMBLY**
STOSSFÄNGERANORDNUNG
AGENCEMENT DE PARE-CHOCS

(30) Priority: 14.07.2015 TR 201508783
(43) Date of publication of application: 23.05.2018
(73) Proprietor: Tofas Turk Otomobil Fabrikasi Anonim Sirketi, Bursa (TR)
(72) Inventor: AKSEL, Levent, Bursa (TR); POLAT, Sabri Erkan, Bursa (TR)
(74) Representative: Dericioglu Kurt, Ekin
(86) International application number: PCT/TR2015/050138
(87) International publication number: WO 2017/010954

(56) References cited:
- WO-A1-2005/012043
- DE-A1-102009 025 310
- US-A- 4 072 334
- US-A1- 2004 256 867
- US-A1- 2014 203 577

## Description

### Field of the Invention

The present invention relates to a bumper assembly the weight of which is decreased and which enables to decrease the effect of crash on vehicle and the passengers by absorbing the shock effect generated in the high speed and low speed crashes that can occur in vehicle accidents.

### Background of the Invention

Traffic accidents happen due to various reasons between the automobiles which are indispensable means of transport in our day. These accidents can between two cars, as well as they can be with single vehicles or between a vehicle and a pedestrian. These accidents are inevitable even though precautions are taken. Several new safety precautions are developed especially in field of vehicle design in order to prevent accidents and decrease life and property loss that can occur in accidents. These safety cautions can be divided into two as active and passive safety cautions. Active safety comprises notification systems that will increase control and braking abilities of the vehicle so that the driver avoids the accident, and control algorithms that will activate to detect the accident possibility and prevent the vehicle from this possibility. Passive safety is material change caution taken on the vehicle and structural improvements in order to minimize the negative effects of the accident as much as possible in case of an accident.

In case the vehicles crash, the deformation in front or back of the vehicle moving towards the passenger compartment can cause unwanted situations in terms of safety. Inertial effects are decreased by absorbing kinetic energy of the vehicle in a balanced and continuous way in this kind of accidents, and thus the less harm comes on the people inside the vehicle. Shock absorbers are used behind the bumper so that less harm comes on the passenger cabin in case the vehicles crash. The shock absorbers located after the bumper taking the first impact during crash absorbs a certain part of the energy.

United States Patent Document no US8469417B2, an application known in the state of the art, discloses a vehicle bumper comprising polymeric crash boxes and a traverse. The crash boxes are connected to the vehicle chassis with connection members, and they are deformable.

Document no WO2005012043A1 discloses a bumper system which includes a tubular beam (21) and a thermoformed energy absorber with crush boxes (23) formed into a base flange, such as by vacuum or thermal forming processes. A bumper system includes a B-shaped roll formed and swept tubular beam with mounts adapted for attachment to front rails of a vehicle frame, and a thermoformed energy absorber. The energy absorber has a base flange, and a plurality of thermoformed crush boxes thermally deformed from the material of the base flange 24.

### The Problems Solved with the Invention

The objective of the present invention is to provide a bumper assembly which prevents unwanted situations in terms of safety by preventing the deformation of the vehicle from moving towards the passenger compartment in case the vehicles crash.

Another objective of the present invention is to provide a relieved bumper assembly by using new hybrid shock absorbers.

### Detailed Description of the Invention

A bumper assembly realized to fulfill the objective of the present invention is illustrated in the accompanying figure, in which:

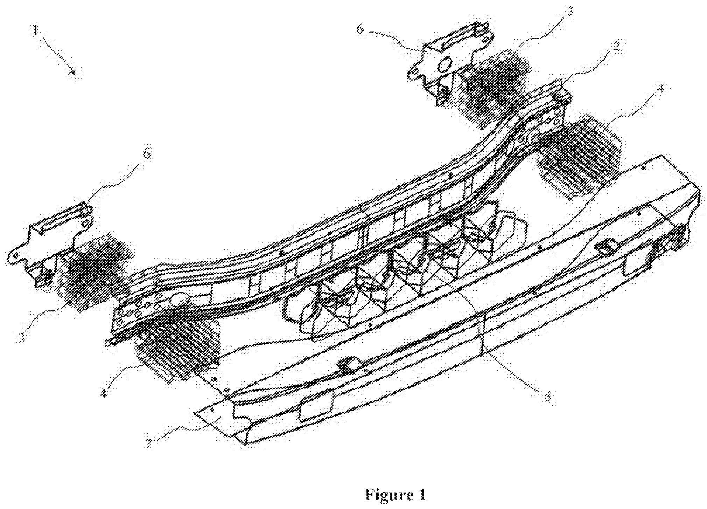

Figure 1 is the perspective view of a bumper assembly.

The components shown in the figures are each given reference numbers as follows:
1. Bumper assembly
2. Traverse
3. First shock absorber
4. Second shock absorber
5. Third shock absorber
6. Bracket
7. Cover

A bumper assembly (1), which enables to decrease the effect of crash on the life cabin by absorbing the shock effect created by the vehicle accidents, essentially comprises
- at least one traverse (2) which is manufactured from metal sheet and extends along the width of the vehicle,
- at least two first shock absorbers (3) which are provided at both ends of the traverse (2) between the traverse and the vehicle chassis, enable to absorb crash effects transferred from the traverse (2), and which are manufactured from polymeric material,
- at least two second shock absorbers (4) which are provided at both ends of the traverse (2) on the side where the traverse is not connected to the vehicle chassis, enable to absorb crash effects transferred from the traverse (2), and which are manufactured from polymeric material,
- at least one third shock absorber (5) which is provided in the middle of the traverse (2) on the side where the traverse is not connected to the vehicle chassis, enables to absorb crash effects transferred from the traverse (2), and which is manufactured from polymeric material.

There is at least one bracket (6) between each first shock absorber (3) and the chassis so that the traverse (2) and the first shock absorber (3) are fixed to the vehicle chassis. The bracket (6) is manufactured from metal sheet and it is bent such that it will wrap around the first shock absorber (3) and it is fixed to the traverse (3) from its bent ends (3).

There are first shock absorbers (3) at two ends of the traverse (2), and there is at least one hole on the area where the second shock absorber (4) corresponds to. On the first shock absorber (3), there are protrusions passing through the holes on the traverse (2). The protrusions present on the first shock absorbers (3) are connected with the second shock absorber (4) using hot member welding method.

The third shock absorber (5) is fixed on the traverse (2) with a dented structure.

There is a cover (7) which is fixed to the traverse (2) and which provides an aesthetic appearance by wrapping around the second shock absorbers (4) and the third shock absorber.

## Claims

1. A bumper assembly (1), which enables to decrease the effect of crash on the life cabin by absorbing the shock effect created by the vehicle accidents and comprising;
- at least one traverse (2) which is manufactured from metal sheet and extends along the width of the vehicle,
- at least two first shock absorbers (3) which are provided at both ends of the traverse (2) between the traverse and the vehicle chassis, enable to absorb crash effects transferred from the traverse (2),
- at least two second shock absorbers (4) being provided at both ends of the traverse (2) on the side where the traverse is not connected to the vehicle chassis, which two second shock absorbers (4) absorb crash effects transferred from the traverse (2),
- at least one third shock absorber (5) being provided in the middle of the traverse (2) on the side where the traverse is not connected to the vehicle chassis, which third shock absorber absorbs crash effects transferred from the traverse (2), **and characterized by**
- the traverse (2) has at least one hole at each end where the first shock absorber (3) and the second shock absorber (4) correspond to
- the first shock absorber (3) has protrusions thereon passing through the holes on the traverse (2),
- the protrusions which are provided on the first shock absorber (3), and fixed to the second shock absorber (4) using hot member welding method.

2. A bumper assembly (1) according to claim 1, **characterized by** at least one bracket (6) between each first shock absorber (3) and the chassis so that the traverse (2) and the first shock absorber (3) are fixed to the vehicle chassis.

3. A bumper assembly (1) according to claim 2, **characterized by** bracket (6) which is manufactured from metal sheet, and which is bent such that it will wrap the first shock absorber (3) and fixed to the traverse (2) from its bent ends.

4. A bumper assembly (1) according to claim 1, **characterized by** third shock absorber (5) which is fixed on the traverse (2) with a dented structure.

5. A bumper assembly (1) according to claim 1, **characterized by** a cover (7) which is fixed to the traverse (2) and which provides an aesthetic appearance by wrapping around the second shock absorbers (4) and the third shock absorber.

## Patentansprüche

1. Stoßfängeranordnung (1), die es ermöglicht, die Wirkung des Aufpralls auf die Lebenskabine zu verringern, indem sie die durch die Fahrzeugunfälle verursachte Stoßwirkung absorbiert und umfasst;
- mindestens eine Traverse (2), die aus Blech gefertigt ist und sich über die Breite des Fahrzeugs erstreckt,
- mindestens zwei erste Stoßdämpfer (3), die an beiden Enden der Traverse (2) zwischen der Traverse und dem Fahrzeugchassis vorgesehen sind, die es ermöglichen, von der Traverse (2) übertragene Kollisionswirkungen aufzunehmen,
- mindestens zwei zweite Stoßdämpfer (4) an beiden Enden der Traverse (2) auf der Seite vorgesehen sind, auf der die Traverse nicht mit dem Fahrzeugchassis verbunden ist, die zwei zweite Stoßdämpfer (4) absorbieren die von der Traverse (2) übertragenen Kollisionswirkungen,
- mindestens ein dritter Stoßdämpfer (5) in der Mitte der Traverse (2) auf der Seite vorgesehen ist, auf der die Traverse nicht mit dem Fahrzeugchassis verbunden ist, der die von der Traverse (2) übertragenen Kollisionswirkungen absorbiert,
**und gekennzeichnet durch**
- die Traverse (2) an jedem Ende mindestens eine Bohrung aufweist, in der der erste Stoßdämpfer (3) und der zweite Stoßdämpfer (4) dem ersten Stoßdämpfer (3) entsprechen, der Vorsprünge aufweist, die durch die Löcher auf der Traverse (2) hindurchgehen, die Vorsprünge, die am ersten Stoßdämpfer (3) vorgesehen sind und am zweiten Stoßdämpfer (4) mittels Heißteilschweißverfahren befestigt sind.

2. Stoßfängeranordnung (1) nach Anspruch 1, **gekennzeichnet durch** mindestens eine Halterung (6) zwischen jedem ersten Stoßdämpfer (3) und dem Chassis, so dass die Traverse (2) und der erste Stoßdämpfer (3) am Chassis befestigt sind.

3. Stoßfängeranordnung (1) nach Anspruch 2, **gekennzeichnet durch** eine Halterung (6), die aus Blech gefertigt ist und so gebogen ist, dass sie den ersten Stoßdämpfer (3) umhüllt und an der Traverse (2) mit ihren gebogenen Enden befestigt ist.

4. Stoßfängeranordnung (1) nach Anspruch 1, **gekennzeichnet durch** einen dritten Stoßdämpfer (5), der an der Traverse (2) mit einer eingedellten Struktur befestigt ist.

5. Stoßfängeranordnung (1) nach Anspruch 1, **gekennzeichnet durch** eine Abdeckung (7), die an der Traverse (2) befestigt ist und durch Umwickeln der zweiten Stoßdämpfer (4) und des dritten Stoßdämpfers ein ästhetisches Aussehen verleiht.

## Revendications

1. Ensemble pare-chocs (1), qui permet de diminuer l'effet de collision sur l'habitacle en absorbant l'effet de choc créé par les accidents de véhicule et comprenant ;
- au moins une traverse (2) qui est fabriquée en tôle et s'étend sur toute la largeur du véhicule,
- au moins deux premiers absorbeurs de chocs (3) prévus aux deux extrémités de la traverse (2) entre la traverse et le châssis du véhicule, permettent d'absorber les effets de choc transférés de la traverse (2),
- au moins deux deuxièmes absorbeurs de chocs (4) sont prévus aux deux extrémités de la traverse (2) du côté où la traverse n'est pas reliée au châssis du véhicule - lesquels deux seconds absorbeurs de chocs (4) absorbent les effets de collision transférés de la traverse (2),
- au moins un troisième absorbeur de chocs (5) est prévu au milieu de la traverse (2) sur le côté où la traverse n'est pas reliée au châssis du véhicule, lequel troisième absorbeur de chocs absorbe les effets de choc transférés de la traverse (2),
**et caractérisé par**
- la traverse (2) présente au moins un trou à chaque extrémité où le premier absorbeur de chocs (3) et le deuxième absorbeur de chocs (4) correspond au premier absorbeur de chocs (3) sur lequel font saillie des saillies passant par les trous sur la traverse (2), les saillies qui sont prévues sur le premier absorbeur de chocs (3), et fixées sur le second absorbeur de chocs (4) par soudage à chaud d'éléments.

2. Ensemble pare-chocs (1) selon la revendication 1, **caractérisé par** au moins un support (6) entre chaque premier absorbeur de chocs (3) et le châssis de sorte que la traverse (2) et le premier absorbeur de chocs (3) soient fixés sur le châssis du véhicule.

3. Ensemble pare-chocs (1) selon la revendication 2, **caractérisé par** le support (6) qui est fabriqué à partir d'une tôle métallique, et qui est plié de manière à envelopper le premier absorbeur de chocs (3) et fixé à la traverse (2) par ses extrémités pliées.

4. Ensemble pare-chocs (1) selon la revendication 1, **caractérisé par** un troisième absorbeur de chocs (5) qui est fixé sur la traverse (2) avec une structure bosselée.

5. Ensemble pare-chocs (1) selon la revendication 1, **caractérisé par** un couvercle (7) qui est fixé à la traverse (2) et qui donne un aspect esthétique en enveloppant le deuxième absorbeur de chocs (4) et le troisième absorbeur de chocs.
